# NEUE EUROPÄISCHE PATENTSCHRIFT

(11) **EP 0 566 025 B2**
(45) Veröffentlichungstag und Bekanntmachung des Hinweises auf die Entscheidung über den Einspruch: **02.06.1999**
(45) Hinweis auf die Patenterteilung: 07.06.1995
(21) Anmeldenummer: 93105796.2
(22) Anmeldetag: 07.04.1993
(51) Int. Cl.: B62M 25/08, G05B 15/02, H04Q 9/14, H04L 1/14

(54) **Steuervorrichtung für ein Stellglied**
Control device for an actuator
Dispositif de commande pour un actionneur

(30) Priorität: 13.04.1992 DE 4212319
(43) Veröffentlichungstag der Anmeldung: 20.10.1993
(73) Patentinhaber: Mannesmann Sachs Aktiengesellschaft, 97424 Schweinfurt (DE)
(72) Erfinder: Fey, Rainer, W-8720 Schweinfurt (DE); Thein, Albert, W-8728 Hassfurt (DE)
(74) Vertreter: Prechtel, Jörg, Dipl.-Phys. Dr.

(56) Entgegenhaltungen:
- GB-A- 2 041 576
- GB-A- 2 172 725
- GB-A- 2 183 975
- JP-A-59 153 684
- US-A- 3 002 835
- US-A- 4 123 796
- US-A- 4 490 127
- US-A- 4 605 240

## Beschreibung

Die Erfindung betrifft eine Steuervorrichtung zum Steuern wenigstens eines Stellglieds eines Fahrrads nach dem Oberbegriff des Anspruchs 1.

Als eine derartige Steuervorrichtungen ist bspw. aus der JP-A-59-153 684 eine elektrische Kettenschaltung für ein Fahrrad bekannt. Bei dieser bekannten Kettenschaltung ist ein am Fahradlenker angeordneter Signalgeber mit einem im Bereich der Hinterradnabe angebrachten Stellglied, nämlich einem elektrischen Kettenwerfer, über eine Signalleitung verbunden. Zum Schalten gibt der Fahrer des Fahrrads über den Signalgeber einen gewünschten Gang vor, worauf ein diesem Gang entsprechendes Signal an das Stellglied weitergegeben wird. Ein im Stellglied vorgesehener Sensor erfaßt die momentane Betriebsstellung des Stellglieds und übermittelt dem Signalgeber ein der Betriebsstellung entsprechendes Signal. Wenn die dem gewünschten Gang entsprechende Betriebsstellung des Stellglieds erreicht ist, deaktiviert der Signalgeber das Stellglied mittels eines Anhaltesignals.

Bei der aus der US-A-4 605 240 bekannten Steuervorrichtung ist eine am Lenker des Fahrrads angeordnete Schalt- und Anzeigeeinheit über einen ersten Signalleitungsabschnitt mit einer unter dem Sattel des Fahrrads angeordneten Steuereinheit verbunden, welche ihrerseits über einen zweiten Signalleitungsabschnitt mit dem im Bereich der Hinterradnabe angeordneten Stellglied verbunden ist. Die jeweilige Stellung des Stellglieds wird von einem Positionssensor an einen in der Steuereinheit aufgenommenen Mikrocomputer rückgemeldet.

Aus der DE-A-30 02 835 ist eine Vorrichtung zum Regeln einer elektrischen Antriebseinheit für ein den Durchsatz eines Prozeßfluids steuernden Ventils bekannt, welche es ermöglicht, die Folgen der Massenträgheit der Antriebseinheit im Regelungsprozeß zu berücksichtigen. Die von einem Lagefühler erfaßte Stellung des Ventils wird dem zentralen Prozeßsteuerrechner übermittelt.

Gemäß Vorstehendem wird bei den bekannten Steuervorrichtungen zwischen der Stellvorrichtung und dem Signalgeber eine große Signalmenge hin- und herübertragen. Die Störanfälligkeit der bekannten Steuervorrichtung infolge Rauschens ist aufgrund des langen Signalwegs relativ hoch. Darüber hinaus kann es infolge des großen Signalwegs vorkommen, daß das Anhaltesignal nicht zu dem für eine optimale Einstellung des Stellglieds erforderlichen Zeitpunkt vom Signalgeber zum Stellglied übermittelt werden kann, da die letzte Signalübertragung vom Stellglied zum Signalgeber zu diesem Zeitpunkt noch nicht abgeschlossen ist.

Demgegenüber ist es Aufgabe der Erfindung, eine Steuervorrichtung der eingangs genannten Art bereitzustellen, welche eine höhere Sicherheit gegen Störungen sowie eine verbesserte Einstellbarkeit der Betriebsstellungen des Stellglieds aufweist.

Diese Aufgabe wird erfindungsgemäß durch eine Steuervorrichtung mit den Merkmalen des Anspruchs 1 gelöst. Erfindungsgemäß können die herkömmlich nur von dem Signalgeber ausgeführten Funktionen auf die Signalüberwachungseinheiten aufgeteilt werden. Hierdurch entfällt bei Funktionen, die ausschließlich in der dem Stellglied zugeordneten Signalüberwachungseinheit ausgeführt werden, die mit diesen Funktionen herkömmlich verbundene Signalübertragungsmenge zum Signalgeber. Infolge der herabgesetzten Signalmenge kann erfindungsgemäß auch die Fehlerhäufigkeit infolge Rauschens vermindert werden.

Um verhindern zu können, daß unsinnige Schaltvorgaben durch den Benutzer zu Stellversuchen des Stellglieds führen, beispielsweise, wenn der Benutzer bei einer Fahrt im höchsten Gang versucht, noch einen Gang hochzuschalten, wird vorgeschlagen, daß die erste Signalüberwachungseinheit eine Speicher-Einrichtung umfaßt, in der für jede Schalteinstellung des Signalgebers vorbestimmte, zulässige Ziel-Schalteinstellungen gespeichert sind, und weiter einen Komparator umfaßt zum Vergleichen einer vom Benutzer vorgegebenen, neuen Schalteinstellung mit den für die momentane Schalteinstellung zulässigen Ziel-Schalteinstellungen, wobei der Signalgeber dem wenigstens einen Stellglied nur dann ein Schaltbefehls-Signal übermittelt, wenn der Komparator eine Übereinstimmung der gewünschten Schalteinstellung mit einer der zulässigen Ziel-Schalteinstellungen festgestellt hat.

Um den Benutzer auf die Unzulässigkeit seiner Schaltvorgabe aufmerksam machen zu können, ist vorgesehen, daß der Signalgeber eine Anzeigevorrichtung aufweist, wobei auf der Anzeigevorrichtung eine "unzulässiger Schaltbefehl"-Meldung angezeigt wird, wenn der Komparator zwischen keiner der zulässigen Ziel-Schalteinstellungen und der gewünschten Schalteinstellung eine Übereinstimmung festgestellt hat.

Wenn die wenigstens eine zweite Signalüberwachungseinheit eine Speicher-Einrichtung umfaßt, in der für jede Betriebsstellung des jeweiligen Stellglieds ein dieser Betriebsstellung entsprechender Soll-Stellwert für das Stellglied gespeichert ist, kann auf eine mechanische Rastvorrichtung zur Einstellung des Stellglieds in eine gewünschte Betriebsstellung verzichtet werden.

In Weiterbildung dieser Ausführungsform ist vorgesehen, daß das Stellglied einen Sensor aufweist zur Erfassung eines momentanen Ist-Stellwerts des Stellglieds, wobei der Sensor mit der zweiten Signalüberwachungseinheit zur Übermittlung des erfaßten Ist-Stellwerts verbunden ist, und daß die zweite Signalüberwachungseinheit einen Komparator aufweist zum Vergleichen des momentanen Ist-Stellwerts mit einem einer Ziel-Schalteinstellung entsprechenden Soll-Stellwert unter Bildung einer Differenz zwischen dem Ist-Stellwert und dem Soll-Stellwert, wobei die Steuervorrichtung das Stellglied entsprechend dieser Differenz ansteuert. Hierdurch kann der Sollwert-Istwert-Vergleich zwischen einer gewünschten und der momentanen Stellung des Stellglieds von der zweiten Signalüberwachungseinheit durchgeführt werden, ohne daß hierfür eine Signalübermittelung zum Signalgeber erforderlich ist. Mit dieser Maßnahme kann somit eine weitere Reduzierung der Signalmenge und eine Erhöhung der Störsicherheit erzielt werden.

Um dem Benutzer die korrekte Ausführung des Schaltbefehls mitteilen zu können, wird vorgeschlagen, daß die zweite Signalüberwachungseinheit der ersten Signalüberwachungseinheit ein "Befehl ausgeführt"-Signals übermittelt, wenn der Komparator die Gleichheit des momentanen Ist-Stellwerts mit dem vorgegenenen Soll-Stellwert feststellt.

Dadurch, daß die zweite Signalüberwachungseinheit der ersten Signalüberwachungseinheit ein "Befehl nicht ausführbar"-Signal übermittelt, wenn der Komparator festgestellt hat, daß das Stellglied nicht auf den vorgegebenen Soll-Stellwert eingestellt werden kann, kann der Benutzer darauf aufmerksam gemacht werden, daß ein zulässiger Schaltbefehl aus irgendeinem Grund, bspw. aufgrund eines Defekts des Stellglieds, nicht ausgeführt werden kann.

Um in diesem Fall eine Beschädigung des Stellglieds infolge von Überlastung verhindern zu können, ist vorgesehen, daß die Steuervorrichtung das Stellglied deaktiviert, wenn der Komparator festgestellt hat, daß das Stellglied nicht auf den vorgegebenen Soll-Stellwert eingestellt werden kann.

In einer Ausführungsform kann eine Überwachungseinrichtung zur Überwachung einer Fehlfunktion des Stellglieds realisiert werden, indem die zweite Signalüberwachungseinheit ein Zeitglied aufweist, das in Abhängigkeit eines übermittelten Schaltsignals auf eine vorbestimmte Zeit einstellbar und in Abhängigkeit einer vom Komparator festgestellten Gleichheit von momentanem Ist-Stellwert und vorgegebenem Ziel-Stellwert anhaltbar ist, und die zweite Signalüberwachungseinheit der ersten Signalüberwachungseinheit nach Ablauf der vorbestimmten Zeit das "Befehl nicht ausführbar"-Signal übermittelt. Die vorbestimmte Zeit kann hierbei so groß gewählt werden, daß normalerweise während dieser Zeit ein Schaltbefehl ausgeführt werden kann.

In einer hierzu alternativen Ausführungform ist vorgesehen, daß das Stellglied einen mit der zweiten Signalüberwachungseinheit verbundenen Stromstärke-Sensor aufweist, und daß die zweite Signalüberwachungseinheit der ersten Signalüberwachungseinheit ein "Befehl nicht ausführbar"-Signal übermittelt, wenn der Wert der erfaßten Stromstärke einen vorbestimmten Wert überschreitet. Hierdurch kann eine Überlastung der Antriebseinheit des Stellglieds infolge überhöhter Stromstärke vermieden werden.

Bei einem elektrischen Kettenwerfer eines Fahrrads kann zusätzlich oder alternativ vorgesehen sein, daß das Stellglied einen mit der zweiten Signalüberwachungseinheit verbundenen Kettenbewegungs-Sensor aufweist zur Erfassung der Laufgeschwindigkeit einer Kette eines Fahrrads, und daß die zweite Signalüberwachungseinheit der ersten Signalüberwachungseinheit ein "Befehl nicht ausführbar"-Signal übermittelt, wenn der Wert der erfaßten Laufgeschwindigkeit einen vorbestimmten Wert unterschreitet. Hierdurch kann ein Schaltversuch, der von vorneherein zum Scheitern verurteilt ist, weil der Radfahrer die Pedale nicht bewegt, im voraus erkannt und seine Ausführung unterdrückt werden.

Um die über die Signalleitung übertragenen Signale unempfindlicher gegen Rauscheinflüsse machen zu können, wird vorgeschlagen, daß die Signalleitung zur digitalen Signalübermittlung ausgebildet ist.

Um hierbei mit einer möglichst geringen Anzahl von Leitungsadern auskommen zu können, wird vorgeschlagen, daß die Signalleitung zur seriellen Signalübermittlung ausgebildet ist. Hierbei kann die Signalleitung in herkömmlicher Weise zur elektrischen Signalübermittlung ausgebildet sein, oder alternativ zur optischen Signalübertragung als Lichtleiter, insbesondere als Glasfaserkabel, ausgebildet sein.

Um auch bei Vorhandensein einer Mehrzahl von Stellgliedern mit einer geringen Anzahl von Leitungen auskommen zu können, wird vorgeschlagen, daß eine einzige Signalleitung vorgesehen ist, mit der alle dem Signalgeber und den Stellgliedern zugeordneten Signalüberwachungseinheiten verbunden sind.

Die Erfindung wird im folgenden an Ausführungsbeispielen anhand der beiliegenden Zeichnung näher erläutert werden. Es stellt dar:
- Fig. 1: eine Seitenansicht eines mit einer Steuervorrichtung für einen elektrischen Kettenwerfer versehenen Fahrrads;
- Fig. 2: eine schematische Darstellung zur Erläuterung der Funktion der erfindungsgemäßen Steuervorrichtung; und
- Fig. 3: eine Ansicht analog Fig. 1 eines mit zwei Stellvorrichtungen versehenen Fahrrads.

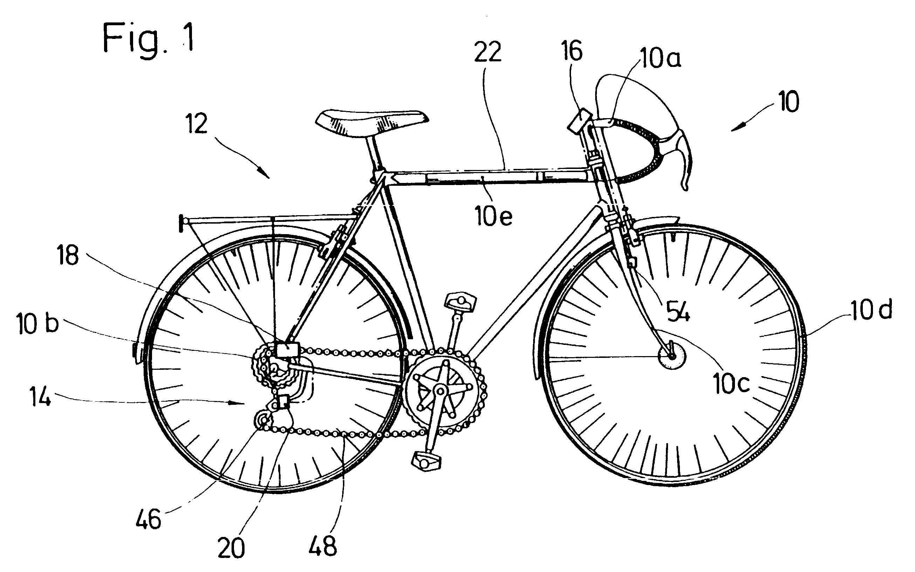

In Fig. 1 ist eine Seitenansicht eines im folgenden mit 10 bezeichneten Fahrrads dargestellt, welches mit einer erfindungsgemäßen Steuervorrichtung 12 für einen elektrischen Kettenwerfer 14 versehen ist. Die Steuervorrichtung 12 umfaßt einen am Fahrradlenker 10a angebrachten Signalgeber 16, über welchen ein Fahrer des Fahrrads 10 einen gewünschten neuen Gang für einen Gangwechsel eingeben kann, sowie eine im Bereich der Hinterradnabe 10b angeordnete Steuereinheit 18 zum Steuern des Stellglieds 20 des Kettenwerfers 14. Der Signalgeber 16 und die Steuereinheit 18 sind über eine Signalleitung 22 miteinander verbunden.

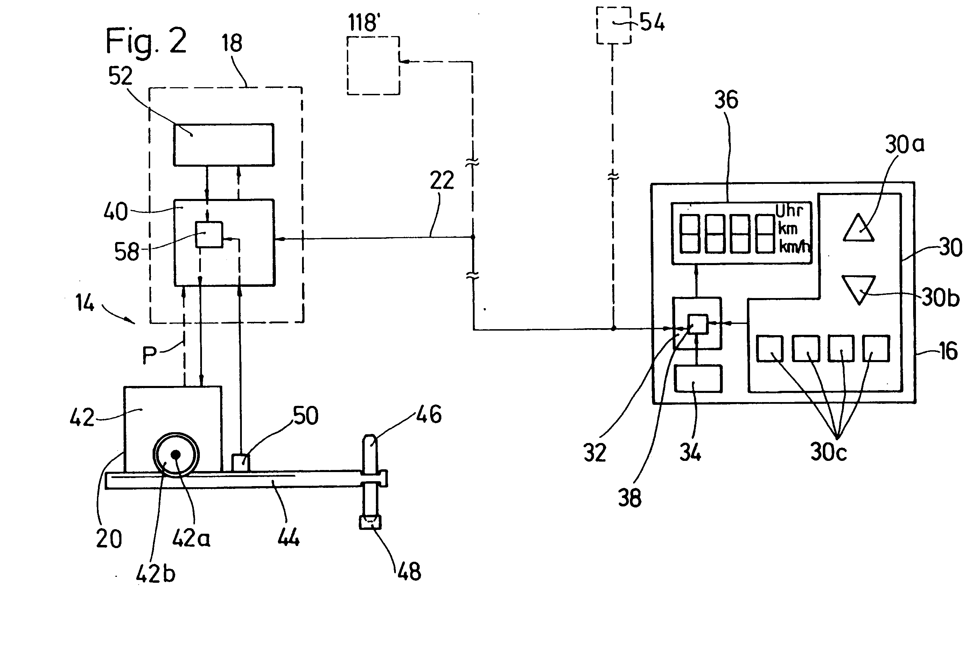

Im folgenden wird anhand von Fig. 2 im einzelnen auf den Aufbau und die Funktion der Steuervorrichtung eingegangen werden.

Der Signalgeber 16 umfaßt eine Eingabeeinheit 30, bspw. eine Tastatur, über welche der Fahrer in den Signalgeber 16 verschiedene Befehle eingeben kann. So kann er im normalen Fahrbetrieb beispielsweise durch Drücken einer "nach oben"-Taste 30a bzw. einer "nach unten"-Taste 30b anzeigen, daß er im nächsthöheren bzw. nächsttieferen Gang fahren möchte. Die eingegebenen Befehle werden von der Eingabeeinheit 30 an eine Signalüberwachungseinheit 32 weitergeleitet, die die Zulässigkeit des vorgegebenen Schaltbefehls überprüft. Die Signalüberwachungseinheit 32 weist hierzu einen Komparator 38 auf, der den gewünschten Gang mit den in einer Menge von für den momentan eingelegten Gang zulässigen Zielgängen enthaltenen Gängen vergleicht. Für jeden der möglichen Gänge der Kettenschaltung ist in einer Speichereinrichtung 34 eine solche Menge zulässiger Zielgänge gespeichert. Ein Beispiel für derartige Zielgangmengen ist in Tabelle 1 dargestellt. Gemäß Tabelle 1 ist es bspw. nicht zulässig, vom ersten Gang in den dritten Gang zu schalten. Darüber hinaus werden unsinnige Schaltvorgaben, wie bspw. ein Schalten in einen nicht vorhandenen fünften Gang, abgefangen.

**Tabelle 1**

| mögliche Gänge | zulässige Zielgänge |
|---|---|
| 1 | 2 |
| 2 | 1, 3 |
| 3 | 2, 4 |
| 4 | 3 |

Wird der eingegebene Gang von der Signalüberwachungseinheit 32 für zulässig erachtet, so wird ein entsprechender Schaltbefehl über die Signalleitung 22 an die Steuereinheit 18 des Kettenwerfers 14 weitergegeben. Darüber hinaus wird die Zulässigkeit des gewünschten Gangs an einer Anzeigevorrichtung 36 des Signalgebers 16 angezeigt, etwa durch blinkende Darstellung einer dem gewünschten Gang entsprechenden Zahl. Die Anzeigevorrichtung 36 kann beispielsweise von Flüssigkristallanzeige gebildet sein.

Wurde der ausgegebene Schaltbefehl vom Kettenwerfer 14 erfolgreich ausgeführt, so wird von der Steuereinheit 18 über die Signalleitung 22 ein "Befehl ausgeführt"-Signal an die Signalübewachungseinheit 32 übermittelt. Dem Fahrer des Fahrrads wird die erfolgreiche Ausführung des Schaltbefehls beispielsweise dadurch mitgeteilt, daß die Anzeigevorrichtung von der blinkenden zu einer permanenten Anzeige wechselt.

Der vorstehend beschriebene Schaltbefehl wird in der Steuereinheit 18 von einer zweiten Signalüberwachungseinheit 40 empfangen. Die Signalüberwachungseinheit 40 gibt ein diesem Schaltbefehl entsprechendes Stellsignal an eine Antriebsvorrichtung 42 des Stellglieds 20 aus, welches hierauf ein Stellelement 44 des Stellglieds 20 verstellt.

In Fig. 2 ist die Antriebsvorrichtung schematisch als Elektromotor 42 dargestellt, dessen Ausgangswelle 42a mit einem Zahnrad 42b verbunden ist. Das Zahnrad 42b greift in die Verzahnung des als Zahnstange ausgebildeten Stellelements 44 ein. An einem Ende der Zahnstange 44 ist ein Zahnrad 46 drehbar angebracht, über welches eine Antriebskette 48 des Fahrrads 10 geführt ist (siehe auch Figur 1).

Ein Positionsdetektor 50 erfaßt eine momentane Stellung des Stellelements 44 und gibt ein entsprechendes Signal an die zweite Signalüberwachungseinheit 40 weiter. Ein in der Signalüberwachungseinheit 40 vorgesehener Komparator 58 vergleicht den vom Positiondetektor 50 übermittelten Ist-Stellwert mit einem in einer Speichereinrichtung 52 gespeicherten Soll-Stellwert für den neu einzustellenden Gang. Stellt die Signalüberwachungseinheit 40 die Übereinstimmung von Soll- und Ist-Wert fest, so deaktiviert sie das Stellglied 20 und übermittelt der ersten Signalüberwachungseinheit 32 das vorstehend bereits erwähnte "Befehl ausgeführt"-Signal.

Nun kann es vorkommen, daß das Stellglied 20 aus irgendeinem Grund nicht in der Lage ist, den gewünschten Gang einzustellen. Dies kann beispielsweise dadurch geschehen, daß das Stellglied 20 durch Verschmutzung blockiert ist oder daß das Stellglied 20 einen zu hohen Verstellwiderstand zu überwinden hat, weil die Kette 48 des Fahrrads nicht genügend schnell bewegt wird. Sind für diesen Fall keine Vorkehrungen getroffen, so kann die Antriebsvorrichtung 42 des Stellglieds 20 durch den anhaltenden Versuch, den gewünschten Gang einzustellen, dauerhaft beschädigt werden.

Um eine derartige Beschädigung verhindern zu können, kann die zweite Überwachungseinheit 40 beispielsweise mit einem Zeitglied versehen sein, welches bei Übermittlung eines Schaltbefehls von der ersten Signalüberwachungseinheit 32 auf eine vorbestimmte Zeit gesetzt und gestartet wird und welches bei vom Komparator 58 festgestellter Übereinstimmung zwischen dem vom Positionsdetektor 50 erfaßten Ist-Stellwert und dem in der Speichereinrichtung 52 gespeicherten Soll-Stellwert des Stellelements 44 wieder angehalten wird. Kann das Stellglied 20 den gewünschten Gang nicht innerhalb der auf dem Zeitglied gesetzten Zeit einstellen, so wird bei Ablauf des Zeitglieds das Stellglied 20 von der zweiten Signalüberwachungseinheit 40 deaktiviert und der ersten Signalüberwachungseinheit 32 ein "Befehl nicht ausführbar"-Signal übermittelt. Hierauf bringt die Signalüberwachungseinheit 32 die Nichausführbarkeit des Schaltbefehls auf der Anzeigevorrichtung 36 zur Anzeige.

Anstelle des Zeitglieds kann auch ein Stromstärkesensor vorgesehen sein, der die Stromstärke des Speisestroms für den Elektromotor 42 erfaßt und ein entsprechendes Signal an die zweite Signalüberwachungseinheit 40 übermittelt (dies ist in Fig. 2 mit dem gestrichelten Pfeil P angedeutet). Überschreitet die Stromstärke des Speisestroms einen vorbestimmten Wert, so kann wiederum die Antriebsvorrichtung 42 deaktiviert und ein "Schaltbefehl nicht ausführbar"-Signal an die erste Signalüberwachungseinheit 32 übermittelt werden.

Der Signalgeber 16 kann neben der vorstehend beschriebenen Funktion des Hin- und Herschaltens zwischen verschiedenen Gängen der Kettenschaltung auch noch andere Funktionen übernehmen, beispielsweise die Anzeige der Uhrzeit, der momentanen Fahrgeschwindigkeit, der zurückgelegten Entfernung oder dergleichen. Zum Aufruf dieser Funktionen ist die Eingabeeinheit des Signalgebers 16 mit Funktionstasten 30c versehen. Darüber hinaus ist die erste Signalüberwachungseinheit 32 mit einem Geschwindigkeitssensor 54 verbunden, der ebenfalls an die als Daten-Bus ausgebildete Signalleitung 22 angeschlossen ist.

Der Geschwindigkeitssensor 54 kann beispielsweise von einer an einer Gabel 10c des Fahrrads 10 fest angeordneten Hall-Sonde und einem an einer Speiche des Vorderrads 10d angebrachten Permanentmagneten gebildet sein.

Durch die Aufteilung der einzelnen zum ordnungsgemäßen Schalten erforderlichen Funktionen auf die Signalüberwachungseinheiten 32 und 40, die nach dem Konzept der dezentralen Intelligenz an voneinander entfernten Orten angeordnet sind, nämlich die Signalüberwachungseinheit 32 im Signalgeber 16 am Lenker 10a und die zweite Signalüberwachungseinheit 40 in der Steuereinheit 18 im Bereich der Hinterradnabe 10b des Fahrrads 10, kann die Signalübertragungsrate über die Signalleitung 22 auf ein Minimum begrenzt werden. Hierdurch ist eine Signalverfälschung auf dem langen Übertragungsweg über die Signalleitung 22 und die hieraus resultierende Gefahr einer Fehlfunktion der Steuervorrichtung 12 zumindest wesentlich herabgesetzt, wenn nicht gar vollständig vermieden.

Um die Störsicherheit der Steuervorrichtung 12 weiter verbessern zu können, werden die Signale über die Signalleitung 22 nicht in analoger, sondern in digitaler Form übertragen, da digitale Signale weitaus unempfindlicher gegen Rauschen sind als analoge Signale. Um die Anzahl der benötigten Leitungen so klein wie möglich halten zu können, ist die Signalleitung 22 als serielle Datenleitung ausgebildet. Eine derartige, zur seriellen digitalen Datenübertragung geeignete Signalleitung 22 kann beispielsweise von einem einadrigen Glasfaserkabel gebildet sein. Es ist jedoch auch möglich, ein einadriges elektrisches Kabel zu verwenden, über dessen Ader sowohl die Signaldaten als auch die Status-Daten der Signalüberwachungseinheiten 32 und 40 übertragen werden. Als Masse-Anschluß kann der Rahmen 10e des Fahrrads dienen. Es ist jedoch auch möglich, zur Vermeidung hoher Übergangswiderstände zwischen den Signalüberwachungseinheiten 32 und 40 und dem Fahrradrahmen 10e in dem Elektrokabel eine zweite Ader als Masse-Anschluß vorzusehen. Auf einer dritten Ader kann evtl. noch eine Versorgungsspannung zu den Einheiten 32 und 40 geführt sein.

Der Kettenwerfer 14 der Steuervorrichtung 12 ist derart ausgebildet, daß er bei der Montage am Fahrrad 10 zunächst einfach an diesem angebracht werden kann, ohne daß hierbei besondere Rücksicht auf eine genaue Justierung des Stellglieds 20 bezüglich dem von ihm zu verstellenden Zahnkranzpaket der Kettenschaltung des Fahrrads 10 genommen werden müßte. Die Justierung des Stellglieds 20 erfolgt nach abgeschlossener Befestigung des Kettenwerfers 14 am Fahrrad 10 in einem gesonderten Arbeitsschritt, der nachfolgend erläutert werden wird. Hierdurch wird die Montage des Kettenwerfers 14 wesentlich erleichtert, da nicht gleichzeitig auf korrekte Befestigung und ordnungsgemäße Justierung geachtet werden muß.

Zur Kalibrierung des Stellglieds 20 muß zunächst der Signalgeber 16 in den Kalibriermodus eingestellt werden. Dies erfolgt vorzugsweise dadurch, daß zwei voneinander möglichst weit entfernte Funktionstasten 30c gleichzeitig gedrückt werden. Hierdurch kann ein zufälliges Einstellen des Kalibriermodus vermieden werden.

Durch Drücken der "nach oben"-Taste 30a und der "nach unten"-Taste 30b wird hierauf ein zu justierender Gang gewählt. Hierauf erfolgt die Einstellung des Justiermodus für den zu justierenden Gang durch Drücken einer bestimmten der Funktionstasten 30c.

Durch Drücken der "nach oben"-Taste 30a und der "nach unten"-Taste 30b kann im Justiermodus das Stellglied 20 mittels über die erste Signalüberwachungseinheit 32, die Signalleitung 22 und die zweite Signalüberwachungseinheit 40 übermittelte Signale schrittweise verstellt werden, bis das Stellelement 44 eine für den zu justierenden Gang optimale Einstellung erreicht hat. Durch erneutes Drücken der bestimmten Funktionstaste wird der zweiten Signalüberwachungseinheit 40 von der Signalüberwachungseinheit 32 ein "Stellung abspeichern"-Signal übermittelt, woraufhin diese den vom Positionsdetektor 50 in dieser Stellung erfaßten Ist-Stellwert als neuen Soll-Stellwert für den gerade zu justierenden Gang in die Speichereinrichtung 52 einspeichert. Die Speichereinrichtung 52 ist hierzu als löschbarer und wieder programmierbarer Festwertspeicher, beispielsweise als EEPROM ausgebildet.

Hierauf kann die bestimmte Funktionstaste erneut gedrückt werden und über die "nach oben"-Taste 30a bzw. die "nach unten"-Taste 30b ein neuer, zu justierender Gang eingestellt werden.

Das vorstehend beschriebene Verfahren wird solange wiederholt, bis für alle zur Verfügung stehenden Gänge ein Soll-Stellwert in der Speichereinrichtung 52 abgespeichert ist. Der Kalibriermodus wird durch erneutes Drücken der beiden weit auseinanderliegenden Funktionstasten wieder ausgeschaltet.

Um eine mechanische Hysterese infolge eines Spiels des Eingriffs zwischen dem Zahnrad 42b und der Zahnstange 44 berücksichtigen zu können, kann vorgesehen sein, daß für jeden möglichen Gang zwei Soll-Stellwerte gespeichert werden, nämlich einer für ein Hinaufschalten in diesen Gang und einer für ein Hinunterschalten in diesen Gang.

Der vorstehend beschriebene Kalibriermodus kann nicht nur nach der Montage des Kettenwerfers 14 zum Abspeichern der Soll-Stellwerte in der Speichereinrichtung 52 verwendet werden. Vielmehr können die Soll-Stellwerte jedes beliebigen Gangs jederzeit korrigiert werden.

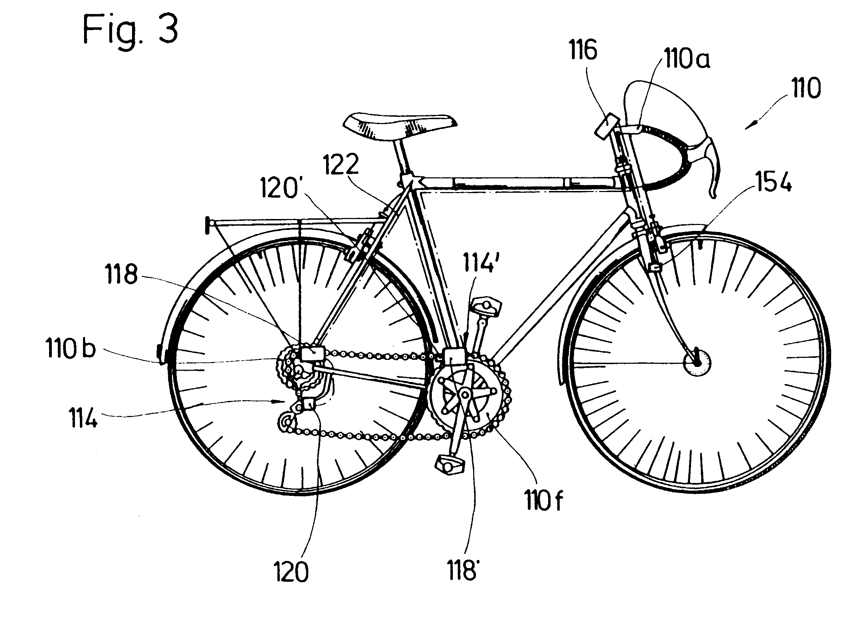

In Fig. 3 ist ein zweites mit einer Steuervorrichtung versehenes Fahrrad dargestellt, wobei analoge Teile mit gleichen Bezugszeichen versehen sind wie in Fig. 1, jedoch vermehrt um die Zahlt 00. Dieses Fahrrad wird im folgenden nur insoweit beschrieben, als es sich von dem in Fig. 1 dargestellten Fahrrad unterscheidet. Ansonsten wird hiermit auf die vorstehende Beschreibung Bezug genommen.

Bei dem in Fig. 3 dargestellten Fahrrad 110 ist der am Lenker 110a angeordnete Signalgeber 116 mit zwei Kettenwerfern 114 und 114' verbunden. Der Kettenwerfer 114 ist im Bereich der Hinterradnabe 110b des Fahrrads angeordnet, während der Kettenwerfer 114' im Bereich des großen Zahnkranzes 110f angeordnet ist. Die beiden Steuereinheiten 118 und 118' sind mit dem Signalgeber 116 über eine als Daten-Bus ausgebildete Signalleitungsschleife 122 verbunden. Die vorstehend beschriebene Kalibrierung der beiden Kettenwerfer 114 und 114' erfolgt für diese beiden getrennt und in analoger Weise wie bei dem vorstehend beschriebenen Kalibrierverfahren.

Ausgehend von einem vom Fahrer eingegebenen Schaltwunsch bestimmt die Signalüberwachungseinheit des Signalgebers 116 die jeweiligen Schaltbefehle für die einzelnen Kettenwerfer 114,114'. Diese Schaltbefehle werden nacheinander, jeweils zusammen mit einem Identifizierungs-Code für den jeweiligen Kettenwerfer, bspw. Kettenwerfer 114 ,an die Signalleitung 122 ausgegeben. Das Signal wird von allen Steuereinheiten 118,118' der Kettenwerfer empfangen. Die adressierte Steuereinheit, hier die Steuereinheit 118 des Kettenwerfers 114, erkennt den Identifizierungs-Code in dem Signal als die eigene Adresse und liest hierauf den Schaltbefehl ein, sendet eine Empfangs-Quittung an den Signalgeber 116 und führt den übermittelten Schaltbefehl aus. Der andere Kettenwerfer, hier Kettenwerfer 114', ignoriert den Schaltbefehl. Nach Übermittlung der Empfangs-Quittung ist die Signalleitung 122 wieder frei für weitere Signalübertragungen, bspw. die Übermittlung des Schaltbefehls an den anderen Kettenwerfer 114'.

## Patentansprüche

1. Steuervorrichtung (12) zum Steuern wenigstens eines Stellglieds (20) eines Fahrrads, insbesondere einer elektrischen Kettenschaltung eines Fahrrads, umfassend:
- einen Signalgeber (16), der an einem von dem wenigstens einen Stellglied (20) entfernten Ort angeordnet und von einem Benutzer in eine Mehrzahl von Schaltbefehlen entsprechenden Schalteinstellungen, insbesondere Gänge, einstellbar ist zur Einstellung des wenigstens einen Stellglieds (20) in eine Mehrzahl von Betriebsstellungen, und
- wenigstens eine Signalleitung (22) zur Übermittlung von Signalen zwischen dem Signalgeber (16) und dem jeweiligen Stellglied (20), und
- eine erste Signalüberwachungseinheit (32), welche dem Signalgeber (16) zugeordnet und mit der wenigstens einen Signalleitung (22) verbunden ist und die zu dem wenigstens einen Stellglied (20) zu übermittelnden Schaltbefehls-Signale überwacht,
**dadurch gekennzeichnet**, daß die Steuervorrichtung (12) je Stellglied (20) eine zweite Signalüberwachungseinheit (40) umfaßt, die dem jeweiligen Stellglied (20) zugeordnet und ebenfalls mit der wenigstens einen Signalleitung (22) verbunden ist, die zudem die vom Signalgeber (16) übermittelten Schaltbefehls-Signale überwacht und die das ihr zugeordnete Stellglied (20) steuert, wobei die ersten und die zweiten Signalüberwachungseinheiten (32, 40) derart an voneinander beabstandeten Stellen angeordnet sind, daß die erste Signalüberwachungseinheit (32) im Signalgeber (16) und die zweite Signalüberwachungseinheit (40) dem jeweiligen Stellglied (20) benachbart angeordnet sind.

2. Steuervorrichtung nach Anspruch 1,
**dadurch gekennzeichnet**,
daß die erste Signalüberwachungseinheit (32) eine Speicher-Einrichtung (34) umfaßt, in der für jede Schalteinstellung des Signalgebers (16) vorbestimmte, zulässige Ziel-Schalteinstellungen gespeichert sind, und
weiter einen Komparator (38) umfaßt zum Vergleichen einer vom Benutzer vorgegebenen, neuen Schalteinstellung mit den für die momentane Schalteinstellung zulässigen Ziel-Schalteinstellungen,
wobei der Signalgeber (16) dem wenigstens einen Stellglied (20) nur dann ein Schaltbefehls-Signal übermittelt, wenn der Komparator (38) eine Übereinstimmung der gewünschten Schalteinstellung mit einer der zulässigen Ziel-Schalteinstellungen festgestellt hat.

3. Steuervorrichtung nach Anspruch 2,
**dadurch gekennzeichnet**,
daß der Signalgeber (16) eine Anzeigevorrichtung (36) aufweist, wobei auf der Anzeigevorrichtung (36) eine "unzulässiger Schaltbefehl"-Meldung angezeigt wird, wenn der Komparator (38) zwischen keiner der zulässigen Ziel-Schalteinstellungen und der gewünschten Schalteinstellung eine Übereinstimmung festgestellt hat.

4. Steuervorrichtung nach einem der Ansprüche 1 bis 3,
**dadurch gekennzeichnet**,
daß die wenigstens eine zweite Signalüberwachungseinheit (40) eine Speicher-Einrichtung (52) umfaßt, in der für jede Betriebsstellung des jeweiligen Stellglieds (20) ein dieser Betriebsstellung entsprechender Soll-Stellwert für das Stellglied (20) gespeichert ist.

5. Steuervorrichtung nach Anspruch 4,
**dadurch gekennzeichnet**,
daß das Stellglied (20) einen Sensor (50) aufweist zur Erfassung eines momentanen Ist-Stellwerts des Stellglieds, wobei der Sensor (50) mit der zweiten Signalüberwachungseinheit (40) zur Übermittlung des erfaßten Ist-Stellwerts verbunden ist, und
daß die zweite Signalüberwachungseinheit (40) einen Komparator (58) aufweist zum Vergleichen des momentanen Ist-Stellwerts mit einem einer Ziel-Schalteinstellung entsprechenden Soll-Stellwert unter Bildung einer Differenz zwischen dem Ist-Stellwert und dem Soll-Stellwert, wobei die Steuervorrichtung (12) das Stellglied (20) entsprechend dieser Differenz ansteuert.

6. Steuervorrichtung nach Anspruch 5,
**dadurch gekennzeichnet**,
daß die zweite Signalüberwachungseinheit (40) der ersten Signalüberwachungseinheit (32) ein "Befehl ausgeführt"-Signals übermittelt, wenn der Komparator (58) die Gleichheit des momentanen Ist-Stellwerts mit dem vorgegebenen Soll-Stellwert feststellt.

7. Steuervorrichtung nach Anspruch 5 oder 6,
**dadurch gekennzeichnet**,
daß die zweite Signalüberwachungseinheit (40) der ersten Signalüberwachungseinheit (32) ein "Befehl nicht ausführbar"-Signal übermittelt, wenn der Komparator (58) festgestellt hat, daß das Stellglied (20) nicht auf den vorgegebenen Soll-Stellwert eingestellt werden kann.

8. Steuervorrichtung nach Anspruch 7,
**dadurch gekennzeichnet**,
daß die Steuervorrichtung (12) das Stellglied (20) deaktiviert, wenn der Komparator (58) festgestellt hat, daß das Stellglied (20) nicht auf den vorgegebenen Soll-Stellwert eingestellt werden kann.

9. Steuervorrichtung nach Anspruch 7 oder 8,
**dadurch gekennzeichnet**,
daß die zweite Signalüberwachungseinheit (40) ein Zeitglied aufweist, das in Abhängigkeit eines übermittelten Schaltsignals auf eine vorbestimmte Zeit einstellbar und in Abhängigkeit einer vom Komparator (58) festgestellten Gleichheit von momentanem Ist-Stellwert und vorgegebenem Soll-Stellwert anhaltbar ist, und
daß die zweite Signalüberwachungseinheit (40) der ersten Signalüberwachungseinheit (32) nach Ablauf der vorbestimmten Zeit das "Befehl nicht ausführbar"-Signal übermittelt.

10. Steuervorrichtung nach Anspruch 7 oder 8,
**dadurch gekennzeichnet**,
daß das Stellglied (20) einen mit der zweiten Signalüberwachungseinheit (40) verbundenen (P) Stromstärke-Sensor aufweist, und
daß die zweite Signalüberwachungseinheit (40) der ersten Signalüberwachungseinheit (32) ein "Befehl nicht ausführbar"-Signal übermittelt, wenn der Wert der erfaßten Stromstärke einen vorbestimmten Wert überschreitet.

11. Steuervorrichtung nach einem der Ansprüche 7 bis 10,
**dadurch gekennzeichnet**,
daß das Stellglied (20) einen mit der zweiten Signalüberwachungseinheit (40) verbundenen Kettenbewegungs-Sensor aufweist zur Erfassung der Laufgeschwindigkeit einer Kette (48) eines Fahrrads (10), und
daß die zweite Signalüberwachungseinheit (40) der ersten Signalüberwachungseinheit (32) ein "Befehl nicht ausführbar"-Signal übermittelt, wenn der Wert der erfaßten Laufgeschwindigkeit einen vorbestimmten Wert unterschreitet.

12. Vorrichtung nach einem der vorhergehenden Ansprüche, dadurch gekennzeichnet,
daß die Signalleitung (22) zur digitalen Signalübermittlung ausgebildet ist.

13. Vorrichtung nach Anspruch 12,
**dadurch gekennzeichnet**,
daß die Signalleitung (22) zur seriellen Signalübermittlung ausgebildet ist.

14. Vorrichtung nach Anspruch 13,
**dadurch gekennzeichne**t,
daß die Signalleitung (22) zur elektrischen Signalübermittlung ausgebildet ist.

15. Vorrichtung nach Anspruch 13,
**dadurch gekennzeichnet**,
daß die Signalleitung (22) zur optischen Signalübertragung als Lichtleiter, insbesondere als Glasfaser-Kabel, ausgebildet ist.

16. Vorrichtung nach einem der Ansprüche 12 bis 15,
**dadurch gekennzeichnet**,
daß bei Vorhandensein einer Mehrzahl von Stellgliedern (120,120') eine einzige Signalleitung (122) vorgesehen ist, mit der alle dem Signalgeber (116) und den Stellgliedern (120,120') zugeordneten Signalüberwachungseinheiten verbunden sind.

## Claims

1. Control device (12) for controlling at least one adjustment member (20) of a bicycle, in particular an electrical chain transfer of a bicycle, comprising:
- signal transmitter (16) arranged at a location distant from the at least one adjustment member (20) which can be set by a user to a plurality of shift settings corresponding to shift commands, in particular gears, for setting the at least one adjustment member (20) into a plurality of operating positions and
- at least one signal line (22) for transmitting shift command signals between the signal transmitter (16) and the respective adjustment member (20), and
- a first signal monitoring unit (32), assigned to the signal transmitter (16) and connected to the least one signal line (22), for monitoring the signals to be transmitted to the at least one adjustment member (20),
**characterised in that**
the control device (12) comprises a second signal monitoring unit (40) per adjustment member (20) assigned to the respective adjustment member (20) and also connected to the at least one signal line (22) for also monitoring the shift command signals transmitted by the signal transmitter, wherein the first and second signal monitoring units (32, 40) are arranged at mutually spaced positions such that the first signal monitoring unit (32) is arranged in the signal transmitter (16) and the second signal monitoring unit (40) is arranged adjacent to the respective adjustment member (20).

2. Control device according to claim 1,
**characterised in that**
the first signal monitoring unit (32) comprises a memory device (34) in which preset, permissible target shift settings are stored for each shirt setting of the signal transmitter (16), and further comprises a comparator (38) for comparing a new shift setting selected by the user with the target shift settings permissible for instantaneous shift setting, whereby the signal transmitter (16) transmits a shift command signal to the at least one adjustment member (20) only if the comparator (38) has detected an agreement of the desired shift settings with one of the permissible target shift settings.

3. Control device according to claim 2,
**characterised in that**
the signal transmitter (16) has a display device (36), where a message "unacceptable shift command" is shown on the display device (36) if the comparator (38) has not detected agreement between any of the permissible target shift settings and the desired shift setting.

4. Control device according to one of claims 1 to 3, **characterised in that**
the at least one second signal monitoring unit (40) comprises a memory device (52) in which for each operational setting of the respective adjustment member (20) a set adjustment value for the adjustment member (20) corresponding to this operational position is stored.

5. Control device according to claim 4
**characterised in that**
the adjustment member (20) has a sensor (50) for detecting an instantaneous actual adjustment value of the adjustment member, where the sensor (50) is connected to the second signal monitoring unit (40) for transmitting the detected actual adjustment value, and
that the second signal monitoring unit (40) has a comparator (58) for comparing the instantaneous actual adjustment value with a set adjustment value corresponding to a target shift setting by calculating the difference between the actual adjustment value and the set adjustment value, where the control device (12) triggers the adjustment member (20) according to this difference.

6. Control device according to claim 5,
**characterised in that**
the second signal monitoring unit (40) transmits a "command executed" signal to the first signal monitoring unit (32) if the comparator (58) determines the agreement of the instantaneous actual adjustment value with the predetermined set adjustment value.

7. Control device according to claim 5 or 6,
**characterised in that**
the second signal monitoring unit (40) transmits a "command not executed" signal to the first signal monitoring unit (32) if the comparator (58) has determined that the adjustment member (20) cannot be adjusted to the predetermined set adjusting value.

8. Control device according to claim 7,
**characterised in that**
the control device (12) deactivates the adjustment member (20) if the comparator (58) has determined that the adjustment member (20) cannot be adjusted to the predetermined set adjusting value.

9. Control device according to claim 7 or 8,
**characterised in that**
the second signal monitoring unit (40) has a time function element which can be set to a predetermined time period as a function of a transmitted shift signal, and can be stopped as a function of an agreement, detected by the comparator (58), between the instantaneous actual adjustment value and the predetermined set adjustment value, and that the second signal monitoring unit (40) transmits the signal "command cannot be executed" to the first signal monitoring unit (32) after the predetermined time period has elapsed.

10. Control device according to claim 7 or 8,
**characterised in that**
the adjustment member (20) has a (P) current sensor connected to the second signal monitoring unit (40), and
that the second signal monitoring unit (40) of the first signal monitoring unit (32) transmits a signal "command cannot be executed" if the detected current value exceeds a preset value.

11. Control device according to one of claims 7 to 10, **characterised in that**
the adjustment member (20) has a chain movement sensor connected to second signal monitoring unit (40), for detecting the running speed of a chain (48) of a bicycle (10), and
that the second signal monitoring unit (40) transmits a signal "command cannot be executed" to the first signal monitoring unit (32), if the value of the detected running speed falls below a preset value.

12. Device according to one of the preceding claims, **characterised in that**
the signal line (22) is designed for digital signal transmission.

13. Device according to claim 12,
**characterised in that**
the signal line (22) is designed for serial signal transmission.

14. Device according to claim 13,
**characterised in that**
the signal line (22) is designed for electrical signal transmission.

15. Device according to claim 13,
**characterised in that**
the signal line (22) is designed for optical signal transmission as a light guide in particular as a fibreglass cable.

16. Device according to one of claims 12 to 15,
**characterised in that**
when there is a plurality of adjustment members (120, 120'), a single signal line (122) is provided with which all signal monitoring units assigned to the signal transmitter (116) and the adjustment members (120, 120') are connected.

## Revendications

1. Dispositif de commande (12) destiné à la commande d'au moins un organe de réglage (20) d'une bicyclette, en particulier d'un dérailleur électrique d'une bicyclette, comprenant :
un émetteur de signaux (16), situé à un endroit éloigné de l'organe de réglage (20), au nombre minimum d'un, et susceptible d'être amené, par un utilisateur, dans une pluralité de positions de manoeuvre correspondant à des commandes de manoeuvre, en particulier de vitesses, afin de faire passer l'organe de réglage (20), au nombre minimum d'un, dans une pluralité de positions de fonctionnement, et
au moins un circuit d'acheminement de signaux (22) destiné à la transmission de signaux entre l'émetteur de signaux (16) et l'organe de réglage (20) correspondant, et
une première unité de contrôle de signaux (32), associée à l'émetteur de signaux (16), reliée au circuit d'acheminement des signaux (22), au nombre minimum d'un, destinée au contrôle des signaux de commande de manoeuvre destinés à être transmis à l'organe de réglage (20), au nombre minimum d'un, caractérisé en ce que le dispositif de commande comprend, par organe de réglage (20), une deuxième unité de contrôle de signaux (40), associée à l'émetteur de signaux (20) correspondant et également reliée au circuit d'acheminement de signaux (22), au nombre minimum d'un, unité qui de plus contrôle les signaux de commande de manoeuvre transmis par l'émetteur de signaux (16) et qui commande l'organe de réglage qui lui est associé, les première et deuxième unités de contrôle de signaux (32,40) étant disposées à des endroits espacés l'un de l'autre de telle sorte que la première unité de contrôle de signaux (32) est placée dans l'émetteur de signaux (16) et la deuxième unité de contrôle de signaux (40) est voisine de l'organe de réglage correspondant.

2. Dispositif de commande selon la revendication 1, caractérisé en ce que la première unité de contrôle de signaux (32) comprend une mémoire (34) dans laquelle sont stockées des positions de manoeuvre cibles admissibles, prédéterminées pour chaque position de manoeuvre de l'émetteur de signaux (16) et,
en outre, comprend un comparateur (38) destiné à comparer une nouvelle position de manoeuvre, donnée par l'utilisateur, avec les positions de manoeuvre cibles, admissibles pour la position de manoeuvre instantanée,
l'émetteur de signaux (16) ne transmettant un signal d'ordre de commutation à l'organe de réglage (20), au nombre minimum d'un, que lorsque le comparateur (38) a constaté une correspondance de la position de manoeuvre souhaitée avec l'une des positions de manoeuvre cibles admissibles.

3. Dispositif de commande selon la revendication 2, caractérisé en ce que
l'émetteur de signaux (16) possède un dispositif d'affichage (36), un message "ordre de commutation interdit" étant affiché sur le dispositif d'affichage (36) lorsque le comparateur (38) n'a constaté de correspondance entre aucune des positions de manoeuvre cibles admissibles et la position de manoeuvre souhaitée.

4. Dispositif de commande selon l'une des revendications 1 à 3, caractérisé en ce que
la deuxième unité de contrôle de signaux (40), au nombre minimum d'une, comprend une mémoire (52) dans laquelle est stockée, par chaque position de fonctionnement de l'organe de réglage (20) associé, une valeur théorique de réglage correspondant, pour l'organe de réglage (20), à cette position de fonctionnement.

5. Dispositif selon la revendication 4, caractérisé en ce que l'organe de réglage (20) présente un capteur (50) destiné à détecter une valeur effective de réglage instantanée de l'organe de réglage, le capteur (50) étant relié à la deuxième unité de contrôle de signaux (40) pour la transmission de la valeur effective de réglage détectée et
en ce que la deuxième unité de contrôle de signaux (40) présente un comparateur (58) destiné à comparer la valeur effective de réglage instantanée avec une valeur théorique de réglage correspondant à une position de manoeuvre cible, en établissant la différence entre la valeur effective de réglage et la valeur théorique de réglage, le dispositif de commande (12) actionnant l'organe de réglage (20) en fonction de cette différence.

6. Dispositif de commande selon la revendication 5, caractérisé en ce que
la deuxième unité de contrôle de signaux (40) transmet à la première unité de contrôle de signaux (32) un signal "ordre exécuté", lorsque le comparateur (58) constate l'égalité entre la valeur effective de réglage instantanée et la valeur théorique de réglage prédéterminée.

7. Dispositif de commande selon la revendication 5 ou 6, caractérisé en ce que
la deuxième unité de contrôle de signaux (40) transmet à la première unité de contrôle de signaux (32) un signal "ordre non exécutable", lorsque le comparateur (58) a constaté que l'organe de réglage (20) ne peut pas être réglé sur la valeur théorique de réglage prédéterminée.

8. Dispositif de commande selon la revendication 7, caractérisé en ce que
le dispositif de commande (12) désactive l'organe de réglage (20) lorsque le comparateur (58) a constaté que l'organe de réglage (20) ne peut pas être réglé sur la valeur théorique de réglage prédéterminée.

9. Dispositif de commande selon la revendication 7 ou 8, caractérisé en ce que
la deuxième unité de contrôle de signaux (40) présente un système temporisé qui est réglable sur un temps prédéterminé, en fonction d'un signal de commutation transmis, et qui est susceptible d'être bloqué, en fonction d'une égalité, constatée par le comparateur (58), entre la valeur effective de réglage instantanée et la valeur théorique de réglage prédéterminée et en ce que
la deuxième unité de contrôle de signaux (40) transmet à la première unité de contrôle de signaux (32) le signal "ordre non exécutable" une fois que s'est écoulé le temps prédéterminé.

10. Dispositif de commande selon la revendication 7 ou 8, caractérisé en ce que
l'organe de réglage (20) présente un capteur d'intensité de courant relié (P) à la deuxième unité de contrôle de signaux (40) et en ce que
la deuxième unité de contrôle de signaux (40) transmet à la première unité de contrôle de signaux (32) un signal "ordre non exécutable", lorsque la valeur de l'intensité de courant captée dépasse une certaine valeur.

11. Dispositif de commande selon l'une des revendications 7 à 10, caractérisé en ce que
l'organe de réglage (20) présente un capteur de mouvements de la chaîne relié à la deuxième unité de contrôle de signaux (40), destiné à détecter la vitesse de déplacement d'une chaîne (48) d'un vélo (10), et en ce que
la deuxième unité de contrôle de signaux (40) transmet à la première unité de contrôle de signaux (32) un signal "ordre non exécutable", lorsque la valeur de la vitesse de déplacement captée reste en-dessous d'une certaine valeur.

12. Dispositif selon l'une des revendications précédentes, caractérisé en ce que
le circuit d'acheminement de signaux (22) est conçu pour une transmission numérique des signaux.

13. Dispositif selon la revendication 12, caractérisé en ce que
le circuit d'acheminement de signaux (22) est conçu pour une transmission en série de signaux.

14. Dispositif selon la revendication 13, caractérisé en ce que
le circuit d'acheminement de signaux (22) est conçu pour une transmission électrique de signaux.

15. Dispositif selon la revendication 13, caractérisé en ce que
le circuit d'acheminement de signaux (22) est conçu pour la transmission optique des signaux, et est conformé en guide de lumière, en particulier en câble en fibres de verre.

16. Dispositif selon l'une des revendications 12 à 15, caractérisé en ce qu'est prévu, dans le cas d'une pluralité d'organes de réglage (120, 120'), un seul circuit d'acheminement de signaux (122), auquel sont reliées toutes les unités de contrôle de signaux associées à l'émetteur de signaux (116) et aux organes de réglage (120, 120').
